# EUROPEAN PATENT APPLICATION

(11) **EP 4 380 200 A1**
(43) Date of publication of application: **05.06.2024**
(21) Application number: 22851926.0
(22) Date of filing: 22.07.2022
(51) Int. Cl.: H04W 4/06

(54) **DEVICE DISCOVERY METHOD AND APPARATUS**

(30) Priority: 05.08.2021 CN 202110897345
(71) Applicant: Huawei Technologies Co., Ltd., Shenzhen, Guangdong 518129 (CN)
(72) Inventor: LI, Yumin, Shenzhen, Guangdong 518129 (CN); NI, Guanjun, Shenzhen, Guangdong 518129 (CN); ZHU, Xudong, Shenzhen, Guangdong 518129 (CN); LIAN, Hai, Shenzhen, Guangdong 518129 (CN); ZHANG, Jingyun, Shenzhen, Guangdong 518129 (CN)
(74) Representative: Gill Jennings & Every LLP
(86) International application number: PCT/CN2022/107218
(87) International publication number: WO 2023/011212

(57) **Abstract**

Embodiments of this application provide a device discovery method and an apparatus, and relate to the field of communication technologies, to support a plurality of access technologies, and meet diversified requirements for power consumption and bandwidths of different services or a same service in different communication scenarios. In addition, more device discovery modes and device discovery procedures can be supported, to meet requirements of more device discovery scenarios. The method includes: A first device obtains request information of a first application, where the request information indicates a discoverable level of the first device. The first device determines, based on the first application, an access technology corresponding to the first application. The first device advertises a first message based on the request information by using the access technology corresponding to the first application, where the first message includes first indication information, and the first indication information indicates the discoverable level of the first device.

## Description

This application claims priority to Chinese Patent Application No. 202110897345.1, filed with the China National Intellectual Property Administration on August 5, 2021 and entitled "DEVICE DISCOVERY METHOD AND APPARATUS", which is incorporated herein by reference in its entirety.

### TECHNICAL FIELD

This application relates to the field of communication technologies, and in particular, to a device discovery method and an apparatus.

### BACKGROUND

An existing Bluetooth low energy (Bluetooth low energy, BLE) protocol architecture may include a host (host), a controller (controller), and an interface (host interface controller, HCI) between the host and the controller. Three device discovery modes are defined in the host: a non-discoverable mode, a limited discoverable mode, and a generally discoverable mode. Two device discovery procedures are further defined in the host: a limited discovery procedure and a general discovery procedure.

Specifically, a first device configured to be in any one of the foregoing device discovery modes may send an advertising message, and a second device configured to be in any one of the foregoing device discovery procedures may scan the advertising message to discover the first device.

However, the BLE protocol architecture supports only a single BLE access technology, and cannot meet diversified requirements for power consumption and bandwidths of different services or a same service in different communication scenarios. In addition, the BLE protocol architecture supports a small quantity of device discovery modes and device discovery procedures, and cannot meet requirements of more device discovery scenarios.

### SUMMARY

In view of this, embodiments of this application provide a device discovery method and an apparatus, to support a plurality of access technologies, and meet diversified requirements for power consumption and bandwidths of different services or a same service in different communication scenarios. In addition, more device discovery modes and device discovery procedures can be supported, to meet requirements of more device discovery scenarios.

According to a first aspect, an embodiment of this application provides a device discovery method. The method may include: obtaining, by a first device, request information of a first application; determining, based on the first application, an access technology corresponding to the first application; and advertising a first message based on the request information by using the access technology corresponding to the first application, where the request information may indicate a discoverable level of the first device; and the first message may include first indication information indicating the discoverable level of the first device.

Based on the first aspect, the first device may dynamically schedule a plurality of access technologies based on an application, to meet diversified requirements for power consumption and bandwidths of different services or a same service in different communication scenarios. In addition, a plurality of discoverable levels are provided for the first device, so that more device discovery modes and device discovery procedures can be supported, to meet requirements of more device discovery scenarios.

In a possible design, the discoverable level includes one or more of the following: The device expects to be discovered by a previously paired device, the device expects to be discovered by a device with a designated address or service set identifier SSID, the device expects to be discovered by a device that supports a specific service or capability, the device is non-discoverable, the device is generally discoverable, or the device is preferentially discoverable.

Based on this possible design, a plurality of discoverable levels are provided, to meet requirements of more device discovery scenarios.

In a possible design, the first message further includes one or more of the following: identification information of the previously paired device, the designated address or SSID, or the specific service or capability.

In a possible design, the first device determines, based on an application requirement and/or a service type of the first application, the access technology corresponding to the first application.

Based on this possible design, the first device may dynamically schedule a plurality of access technologies based on an application requirement and/or a service type of an application, to meet diversified requirements for power consumption and bandwidths of different services or a same service in different communication scenarios.

In a possible design, the first message further includes second indication information indicating whether the first message is a polling advertising message.

In a possible design, when the first message is a polling advertising message, the first device receives a polling response from a second device; and the first device discovers the second device based on the polling response.

Based on the two possible designs, when the first message is a polling advertising message, the second device may send the polling response to the first device. When the second device is a hidden device (that is, a device that does not send an advertising message, but only performs scanning and receives polling), the first device may discover the hidden device based on a polling response sent by the hidden device.

According to a second aspect, an embodiment of this application provides a communication apparatus. The communication apparatus may implement functions performed by the first device in the first aspect or the possible designs of the first aspect, and the functions may be implemented by hardware executing corresponding software. The hardware or the software includes one or more modules corresponding to the functions, for example, a transceiver module and a processing module. The transceiver module is configured to obtain request information of a first application. The processing module is configured to determine, based on the first application, an access technology corresponding to the first application. The transceiver module is further configured to advertise a first message based on the request information by using the access technology corresponding to the first application. The request information may indicate a discoverable level of the first device. The first message may include first indication information indicating the discoverable level of the first device.

In a possible design, the discoverable level includes one or more of the following: The device expects to be discovered by a previously paired device, the device expects to be discovered by a device with a designated address or service set identifier SSID, the device expects to be discovered by a device that supports a specific service or capability, the device is non-discoverable, the device is generally discoverable, or the device is preferentially discoverable.

In a possible design, the first message further includes one or more of the following: identification information of the previously paired device, the designated address or SSID, or the specific service or capability.

In a possible design, the processing module is further configured to determine, based on an application requirement and/or a service type of the first application, the access technology corresponding to the first application.

In a possible design, the first message further includes second indication information indicating whether the first message is a polling advertising message.

In a possible design, when the first message is a polling advertising message, the transceiver module is further configured to receive a polling response from a second device; and the processing module is further configured to discover the second device based on the polling response.

It should be noted that for a specific implementation of the communication apparatus, further refer to behavior functions of the first device in the device discovery method provided in any one of the first aspect or the possible designs of the first aspect. For technical effects brought by the communication apparatus, also refer to technical effects brought by any possible design of the first aspect. Details are not described.

According to a third aspect, an embodiment of this application provides a communication apparatus. The communication apparatus may be a first device or a chip or a system-on-a-chip in the first device. The communication apparatus may implement functions performed by the first device in the foregoing aspects or the possible designs, and the functions may be implemented by hardware. In a possible design, the communication apparatus may include a transceiver and a processor. The transceiver and the processor may be configured to support the communication apparatus in implementing the functions in any one of the first aspect or the possible designs of the first aspect. For example, the transceiver may be configured to obtain request information of a first application; the processor may be configured to determine, based on the first application, an access technology corresponding to the first application; and the transceiver may be further configured to advertise a first message based on the request information by using the access technology corresponding to the first application, where the request information may indicate a discoverable level of the first device; and the first message may include first indication information indicating the discoverable level of the first device. In another possible design, the communication apparatus may further include a memory. The memory is configured to store computer-executable instructions and data that are necessary for the communication apparatus. When the communication apparatus runs, the transceiver and the processor execute the computer-executable instructions stored in the memory, to enable the communication apparatus to perform the device discovery method in any one of the first aspect or the possible designs of the first aspect.

For a specific implementation of the communication apparatus in the third aspect, refer to behavior functions of the first device in the device discovery method provided in any one of the first aspect or the possible designs of the first aspect.

According to a fourth aspect, an embodiment of this application provides a device discovery method. The method includes: obtaining, by a second device, a first discovery request of a first application; determining, based on the first application, an access technology corresponding to the first application; scanning, by using the access technology corresponding to the first application, a first message advertised by a first device; and filtering the first message based on a filter policy corresponding to the first application, to determine a device corresponding to the first application, where the first discovery request may be used to request to discover the device corresponding to the first application; and the first message may include first indication information indicating a discoverable level of the first device.

Based on the fourth aspect, the second device may dynamically schedule a plurality of access technologies based on an application, to meet diversified requirements for power consumption and bandwidths of different services or a same service in different communication scenarios. In addition, a plurality of filter policies are provided for the second device, so that more device discovery modes and device discovery procedures can be supported, to meet requirements of more device discovery scenarios.

In a possible design, the second device determines, based on an application requirement and/or a service type of the first application, the access technology corresponding to the first application.

Based on this possible design, the second device may dynamically schedule a plurality of access technologies based on the application requirement and/or the service type of the first application, to meet diversified requirements for power consumption and bandwidths of different services or a same service in different communication scenarios.

In a possible design, the discoverable level includes one or more of the following: The device expects to be discovered by a previously paired device, the device expects to be discovered by a device with a designated address or service set identifier SSID, the device expects to be discovered by a device that supports a designated service or capability, the device is non-discoverable, the device is generally discoverable, or the device is preferentially discoverable.

Based on this possible design, a plurality of discoverable levels are provided, to meet requirements of more device discovery scenarios.

In a possible design, the first message further includes one or more of the following: identification information of the previously paired device, the designated address or SSID, or the specific service or capability.

In a possible design, the filter policy includes one or more of the following: discovering the previously paired device, discovering the device with the designated address or SSID, discovering the device that supports the specific service or capability, discovering a device within a specific range, disabling filtering, discovering a discoverable device, or discovering a preferential device.

Based on this possible design, a plurality of filter policies are provided, so that more device discovery modes and device discovery procedures can be supported, to meet requirements of more device discovery scenarios.

In a possible design, the first message further includes second indication information indicating whether the first message is a polling advertising message.

In a possible design, when the first message is a polling advertising message, and the second device determines that the first device is the device corresponding to the first application, the second device sends a polling response to the first device.

Based on the two possible designs, when the first message is a polling advertising message, the second device may send the polling response to the first device. When the second device is a hidden device (that is, a device that does not send an advertising message, but only performs scanning and receives polling), the first device may discover the hidden device based on a polling response sent by the hidden device.

In a possible design, the second device obtains a second discovery request of a second application, where the second discovery request is used to request to discover a device corresponding to the second application. The second device determines whether the first discovery request overlaps with the second discovery request. If the first discovery request overlaps with the second discovery request, the second device determines the device corresponding to the first application as the device corresponding to the second application. Alternatively, the second device merges the first discovery request and the second discovery request into one discovery request; the first message advertised by the first device is scanned based on the merged discovery request by using the access technology corresponding to the first application; and the first message is filtered based on a merged filter policy, and a device obtained through filtering is determined as the device corresponding to the first application and the device corresponding to the second application, where the merged filter policy is a filter policy obtained by merging the filter policy corresponding to the first application and a filter policy corresponding to the second application, or the merged filter policy is a filter policy corresponding to the merged discovery request.

Based on this possible design, when the second device obtains discovery requests of a plurality of applications, the second device may arbitrate and merge the discovery requests of the plurality of applications, to reduce a quantity of times of performing the foregoing device discovery method by the second device, and reduce power consumption of the second device.

In a possible design, the second device determines a first label based on the first application, where labels corresponding to applications whose discovery requests overlap are the same; and the second device filters the first message based on the filter policy corresponding to the first application, and determines a device obtained through filtering as a device corresponding to an application indicated by the first label.

Based on this possible design, the second device may further set a label for each application based on an application requirement of each application, and subsequently may distribute a device discovery result to each application based on the label.

According to a fifth aspect, an embodiment of this application provides a communication apparatus. The communication apparatus may implement functions performed by the second device in the fourth aspect or the possible designs of the fourth aspect, and the functions may be implemented by hardware executing corresponding software. The hardware or the software includes one or more modules corresponding to the functions, for example, a transceiver module and a processing module. The transceiver module is configured to obtain a first discovery request of a first application. The processing module is configured to determine, based on the first application, an access technology corresponding to the first application. The transceiver module is configured to scan, by using the access technology corresponding to the first application, a first message advertised by a first device. The processing module is configured to filter the first message based on a filter policy corresponding to the first application, to determine a device corresponding to the first application. The first discovery request may be used to request to discover the device corresponding to the first application. The first message may include first indication information indicating a discoverable level of the first device.

In a possible design, the processing module is configured to determine, based on an application requirement and/or a service type of the first application, the access technology corresponding to the first application.

In a possible design, the discoverable level includes one or more of the following: The device expects to be discovered by a previously paired device, the device expects to be discovered by a device with a designated address or service set identifier SSID, the device expects to be discovered by a device that supports a designated service or capability, the device is non-discoverable, the device is generally discoverable, or the device is preferentially discoverable.

In a possible design, the first message further includes one or more of the following: identification information of the previously paired device, the designated address or SSID, or the specific service or capability.

In a possible design, the filter policy includes one or more of the following: discovering the previously paired device, discovering the device with the designated address or SSID, discovering the device that supports the specific service or capability, discovering a device within a specific range, disabling filtering, discovering a discoverable device, or discovering a preferential device.

In a possible design, the first message further includes second indication information indicating whether the first message is a polling advertising message.

In a possible design, when the first message is a polling advertising message, and the processing module determines that the first device is the device corresponding to the first application, the transceiver module sends a polling response to the first device.

In a possible design, the transceiver module is further configured to obtain a second discovery request of a second application, where the second discovery request is used to request to discover a device corresponding to the second application. The processing module is further configured to determine whether the first discovery request overlaps with the second discovery request. If the first discovery request overlaps with the second discovery request, the processing module determines the device corresponding to the first application as the device corresponding to the second application. Alternatively, the processing module merges the first discovery request and the second discovery request into one discovery request; the transceiver module scans, based on the merged discovery request by using the access technology corresponding to the first application, the first message advertised by the first device; and the processing module filters the first message based on a merged filter policy, and determines a device obtained through filtering as the device corresponding to the first application and the device corresponding to the second application, where the merged filter policy is a filter policy obtained by merging the filter policy corresponding to the first application and a filter policy corresponding to the second application, or the merged filter policy is a filter policy corresponding to the merged discovery request.

In a possible design, the processing module is further configured to determine a first label based on the first application, where labels corresponding to applications whose discovery requests overlap are the same; and the processing module is further configured to: filter the first message based on the filter policy corresponding to the first application, and determine a device obtained through filtering as a device corresponding to an application indicated by the first label.

It should be noted that for a specific implementation of the communication apparatus, further refer to behavior functions of the second device in the device discovery method provided in any one of the fourth aspect or the possible designs of the fourth aspect. For technical effects brought by the communication apparatus, also refer to the technical effects brought by any possible design of the fourth aspect. Details are not described.

According to a sixth aspect, an embodiment of this application provides a communication apparatus. The communication apparatus may be a second device or a chip or a system-on-a-chip in the second device. The communication apparatus may implement functions performed by the second device in the foregoing aspects or the possible designs, and the functions may be implemented by hardware. In a possible design, the communication apparatus may include a transceiver and a processor. The transceiver and the processor may be configured to support the communication apparatus in implementing the functions in any one of the fourth aspect or the possible designs of the fourth aspect. For example, the transceiver may be configured to obtain a first discovery request of a first application; the processor may be configured to determine, based on the first application, an access technology corresponding to the first application; the transceiver may be further configured to scan, by using the access technology corresponding to the first application, a first message advertised by a first device; and the processor may be further configured to filter the first message based on a filter policy corresponding to the first application, to determine a device corresponding to the first application, where the first discovery request may be used to request to discover the device corresponding to the first application; and the first message may include first indication information indicating a discoverable level of the first device. In another possible design, the communication apparatus may further include a memory. The memory is configured to store computer-executable instructions and data that are necessary for the communication apparatus. When the communication apparatus runs, the transceiver and the processor execute the computer-executable instructions stored in the memory, to enable the communication apparatus to perform the device discovery method in any one of the fourth aspect or the possible designs of the fourth aspect.

For a specific implementation of the communication apparatus in the sixth aspect, refer to behavior functions of the second device in the device discovery method provided in any one of the fourth aspect or the possible designs of the fourth aspect.

According to a seventh aspect, an embodiment of this application provides a communication apparatus. The communication apparatus includes one or more processors. The one or more processors are configured to run a computer program or instructions. When the one or more processors execute the computer instruction or instructions, the communication apparatus is enabled to perform the device discovery method according to any one of the first aspect or the possible designs of the first aspect, or perform the device discovery method according to any one of the fourth aspect or the possible designs of the fourth aspect.

In a possible design, the communication apparatus further includes one or more communication interfaces. The one or more communication interfaces are coupled to the one or more processors, and the one or more communication interfaces are configured to communicate with a module other than the communication apparatus.

In a possible design, the communication apparatus further includes one or more memories. The one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one device. In other words, the processor and the memory may alternatively be integrated together.

According to an eighth aspect, a communication apparatus is provided. The communication apparatus includes an interface circuit and a logic circuit. The interface circuit is coupled to the logic circuit. The logic circuit is configured to perform the device discovery method according to any one of the first aspect or the possible designs of the first aspect, or perform the device discovery method according to any one of the fourth aspect or the possible designs of the fourth aspect. The interface circuit is configured to communicate with a module other than the communication apparatus.

According to a ninth aspect, a computer-readable storage medium is provided. The computer-readable storage medium stores a computer instruction or program. When the computer instruction or program is run on a computer, the computer is enabled to perform the device discovery method according to any one of the first aspect or the possible designs of the first aspect, or perform the device discovery method according to any one of the fourth aspect or the possible designs of the fourth aspect.

According to a tenth aspect, a computer program product including computer instructions is provided. When the computer program product is run on a computer, the computer is enabled to perform the device discovery method according to any one of the first aspect or the possible designs of the first aspect, or perform the device discovery method according to any one of the fourth aspect or the possible designs of the fourth aspect.

According to an eleventh aspect, an embodiment of this application provides a computer program. When the computer program is run on a computer, the computer is enabled to perform the device discovery method according to any one of the first aspect or the possible designs of the first aspect, or perform the device discovery method according to any one of the fourth aspect or the possible designs of the fourth aspect.

For technical effects brought by any design manner of the seventh aspect to the eleventh aspect, refer to technical effects brought by any possible design of the first aspect, or refer to technical effects brought by any possible design of the fourth aspect. Details are not described.

### BRIEF DESCRIPTION OF DRAWINGS

FIG. 1 is a flowchart of a limited discovery procedure according to an embodiment of this application;
FIG. 2 is a flowchart of a general discovery procedure according to an embodiment of this application;
FIG. 3 is a schematic diagram of an architecture of a SparkLink new short-range protocol according to an embodiment of this application;
FIG. 4 is a schematic diagram of an SLE access technology according to an embodiment of this application;
FIG. 5 is a schematic diagram of an SLB access technology according to an embodiment of this application;
FIG. 6 is a diagram of a composition structure of a communication apparatus according to an embodiment of this application;
FIG. 7 is a flowchart of a device discovery method according to an embodiment of this application;
FIG. 8 is a flowchart of a device discovery method according to an embodiment of this application;
FIG. 9 is a schematic diagram of a frame structure of advertising data according to an embodiment of this application;
FIG. 10 is a schematic diagram of composition of a communication system according to an embodiment of this application;
FIG. 11 is a flowchart of polling advertising according to an embodiment of this application;
FIG. 12 is a flowchart of a device discovery method according to an embodiment of this application;
FIG. 13 is a flowchart of a device discovery method according to an embodiment of this application;
FIG. 14 is a flowchart of an arbitration and merging method according to an embodiment of this application;
FIG. 15 is a flowchart of an arbitration and merging method according to an embodiment of this application;
FIG. 16 is a schematic diagram of composition of a communication system according to an embodiment of this application; and
FIG. 17 is a schematic diagram of composition of a communication apparatus according to an embodiment of this application.

### DESCRIPTION OF EMBODIMENTS

A Bluetooth low energy (Bluetooth low energy, BLE) protocol architecture may include a host (host), a controller (controller), and an interface (host interface controller, HCI) between the host and the controller.

The host may define a device type, a device discovery mode, and a device discovery procedure. The controller may provide an underlying function required in the device discovery procedure, for example, sending an advertising message or scanning an advertising message.

For example, device types may include a peripheral device and a central device. Device discovery modes may include a non-discoverable mode, a limited discoverable mode, and a generally discoverable mode. Device discovery procedures may include a limited discovery procedure and a general discovery procedure.

Specifically, in the device discovery procedure, a peripheral device configured to be in any one of the foregoing device discovery modes may send an advertising message, and a central device configured to be in any one of the foregoing device discovery procedures may scan the advertising message to discover the peripheral device.

For example, the peripheral device may be a device with limited storage or sensitive power consumption, for example, a headset or a watch. The central device may be a device, for example, a mobile phone or a computer. The headset may send an advertising message, and the mobile phone may scan the advertising message sent by the headset to discover the headset.

A device configured to be in the non-discoverable mode may send an advertising message, but cannot configure flag bits of the limited discoverable mode and the generally discoverable mode in advertising data of a Flags (Flags) type.

The limited discoverable mode is generally used for a device that expects to be quickly discovered and connected. A device configured to be in this mode needs to send an advertising message, and needs to configure a limited discoverable mode flag in advertising data of the Flags type.

A device configured to be in the generally discoverable mode needs to send an advertising message, and needs to configure a generally discoverable mode flag in advertising data of the Flags type.

For example, in BLE, a flag bit may be configured in advertising data of the Flags type to indicate the limited discoverable mode or the generally discoverable mode. As shown in the following Table 1, the advertising data of the Flags type may be 1 byte in length. A value of the byte may be set to 0 to indicate the limited discoverable mode, or a value of the byte may be set to 1 to indicate the generally discoverable mode.

**Table 1**

| Data type | Byte | Value | Description |
|---|---|---|---|
| Flags type | 0 | 0 | Limited discoverable mode |
| | 0 | 1 | Generally discoverable mode |
| | 0 | 2 | BR/EDR not supported. Bit 37 of LMP feature mask definitions |
| | 0 | 3 | Simultaneous LE and BR/EDR to same device capable (controller). Bit 49 of LMP feature mask definitions |
| | 0 | 4 | Simultaneous LE and BR/EDR to same device capable (host). Bit 66 of LMP feature mask definitions |
| | 0 | 5, ..., 7 | Reserved |

A device configured to be in the limited discovery procedure may scan an advertising message, and obtain, in a scanning process through filtering, a device configured to be in the limited discoverable mode.

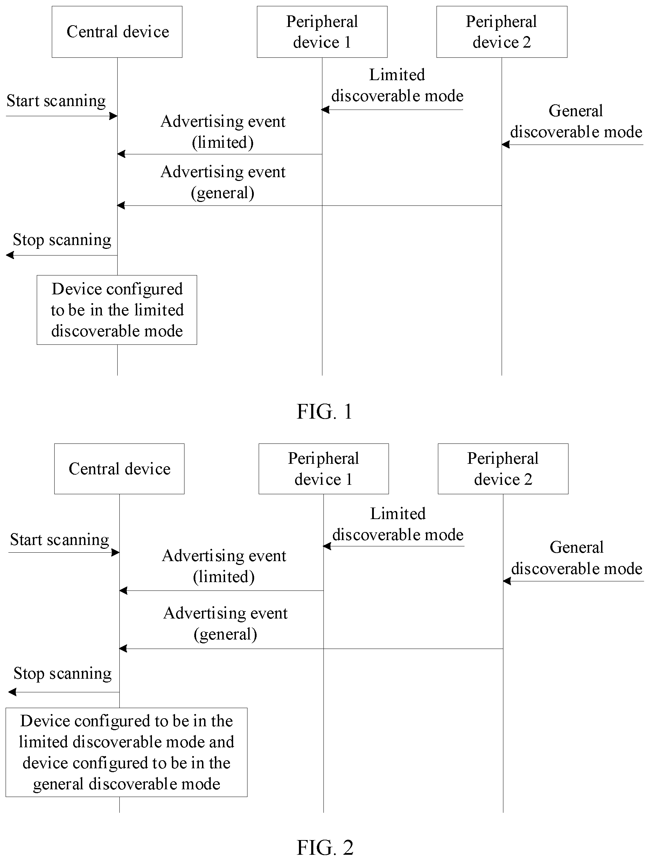

For example, as shown in FIG. 1, peripheral devices include a peripheral device 1 configured to be in a limited discoverable mode and a peripheral device 2 configured to be in a generally discoverable mode. The peripheral device 1 may send an advertising event (limited), to indicate that the peripheral device 1 is configured to be in the limited discoverable mode. The peripheral device 2 may send an advertising event (general), to indicate that the peripheral device 2 is configured to be in the generally discoverable mode. It is assumed that the central device scans the advertising event (limited) and the advertising event (general) during the scan. In this case, the central device may obtain, based on the advertising events through filtering, a device configured to be in the limited discoverable mode. That is, the central device discovers the peripheral device 1.

A device configured to be in the general discovery procedure may scan an advertising message, and obtain, in a scanning process through filtering, a device configured to be in the limited discoverable mode and a device configured to be in the generally discoverable mode. That is, a device configured to be in the non-discoverable mode is removed.

For example, as shown in FIG. 2, peripheral devices include a peripheral device 1 configured to be in a limited discoverable mode and a peripheral device 2 configured to be in a generally discoverable mode. The peripheral device 1 may send an advertising event (limited), to indicate that the peripheral device 1 is configured to be in the limited discoverable mode. The peripheral device 2 may send an advertising event (general), to indicate that the peripheral device 2 is configured to be in the generally discoverable mode. It is assumed that the central device scans the advertising event (limited) and the advertising event (general) during the scan. In this case, the central device may obtain, based on the advertising events through filtering, a device configured to be in the limited discoverable mode and a device configured to be in the generally discoverable mode. That is, the central device discovers the peripheral device 1 and the peripheral device 2.

However, the foregoing BLE protocol architecture supports only a single BLE access technology, and cannot meet diversified requirements for power consumption and bandwidths of different services (for example, an audio service and a video service) or a same application in different communication scenarios (for example, a communication scenario in which a standard sound quality is played in an audio service, and a communication scenario in which a lossless sound quality is played in the audio service). In addition, the BLE protocol architecture supports a small quantity of device discovery modes and device discovery procedures, and cannot meet requirements of more device discovery scenarios. For example, a requirement of a scenario in which a device expects to be discovered only by a previously paired device cannot be met, and a requirement of a scenario in which a device is searched for based on a device distance cannot be met.

In addition, in a device discovery procedure, the central device needs to scan an advertising message sent by the peripheral device to discover the peripheral device. When the peripheral device does not send an advertising message, the peripheral device cannot be discovered. That is, the foregoing BLE protocol architecture cannot support a function of discovering a hidden device (that is, a device that does not send an advertising message, but only performs scanning and receives polling).

Based on the foregoing problem, an embodiment of this application provides a device discovery method. The method may include: obtaining, by a first device, request information of a first application, where the request information indicates a discoverable level of the first device; determining, by the first device based on the first application, an access technology corresponding to the first application; and advertising, based on the request information by using the access technology corresponding to the first application, a first message including first indication information, where the first indication information may indicate the discoverable level of the first device.

In this embodiment of this application, the first device may dynamically schedule a plurality of access technologies based on an application, to meet diversified requirements for power consumption and bandwidths of different services or a same service in different communication scenarios. In addition, a plurality of discoverable levels are provided for the first device, so that more device discovery modes and device discovery procedures can be supported, to meet requirements of more device discovery scenarios.

The following describes implementations of embodiments of this application in detail with reference to accompanying drawings in this specification.

The device discovery method provided in this embodiment of this application may be applied to any communication system. The communication system may be a short-range communication system, a cellular communication system (for example, a long term evolution (long term evolution, LTE) system and new radio (new radio access technology, NR)), a worldwide interoperability for microwave access (worldwide interoperability for microwave access, WiMAX) communication system, and various types of next-generation communication systems (for example, a 6th generation (the 6th generation, 6G) mobile communication system). This is not limited. The short-range communication system may be a Bluetooth communication system, a Bluetooth low energy communication system, a wireless fidelity (wireless fidelity, Wi-Fi) communication system, various types of next-generation communication systems, or the like. This is not limited.

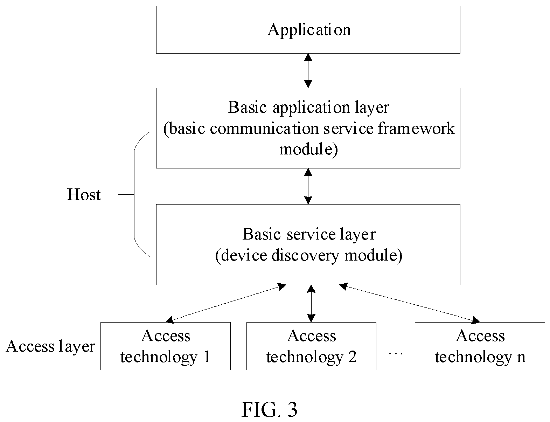

For example, the communication system is a short-range communication system. Each communication device in the short-range communication system may use a SparkLink new short-range protocol. As shown in FIG. 3, an architecture of the SparkLink new short-range protocol may include an access layer, a host, and an application. The access layer may simultaneously support a plurality of access technologies, for example, a SparkLink-basic (SparkLink-basic, SLB) access technology, a SparkLink-low energy (SparkLink-low energy, SLE) access technology, and the like. Above the access layer is a normalized host framework. The host can schedule access technologies supported by the access layer based on a requirement of the application (application, APP).

As shown in FIG. 3, the host may include a basic application layer and a basic service layer.

Specifically, as shown in FIG. 3, the basic application layer may include a basic communication service framework module, and the basic service layer may include a device discovery module.

The basic communication service framework module may be responsible for, in an application-oriented manner, undertaking a device discovery request delivered by the application, and determining, based on an application requirement, an underlying access technology that needs to be scheduled. In addition, a proper device discovery mode, a discoverable level that meets a requirement, a filter policy, and the like are selected by using a service provided by the device discovery module, and a specific device discovery request configuration is delivered to the device discovery module. When the communication device is a scanner device, the basic communication service framework module may further receive a device discovery result sent by the device discovery module, and distribute the device discovery result to each application based on the application requirement.

For example, the basic communication service framework module may determine, based on a quality of service (quality of service, QoS) capability requirement, a service type, and the like of the application, the underlying access technology that needs to be scheduled.

For example, an application requirement is to play 1080P high-definition audio, and a bandwidth requirement of audio data after coding and compression on an underlying transport channel is 5 Mbps. It is assumed that a maximum bandwidth supported by a current SLE access technology is 4 Mbps, and a maximum bandwidth supported by an SLB access technology is about 120 Mbps, the basic communication service framework module may determine that the SLE access technology cannot meet playing of the high-definition audio, to determine that a device supporting the SLB access technology needs to be discovered, and then invoke the SLB access technology to perform device discovery.

The device discovery module may define a device discovery mode, and provide a plurality of device discoverable levels and filter policies. The device discovery module may undertake the device discovery request delivered by the basic communication service framework module, encapsulate a device discovery request command based on the underlying access technology selected in the device discovery request, and distribute the device discovery request command to the corresponding underlying access technology (for example, an access technology such as the SLB access technology or the SLE access technology). When the communication device is a scanner device, the device discovery module may further receive a device discovery result reported by the underlying access technology after the underlying access technology completes processing of the device discovery request command, filter based on a filter policy, and report a filtered device discovery result to the basic communication service framework module.

The underlying access technology is used to receive the device discovery request command sent by the device discovery module. When the communication device is an advertiser device, the underlying access technology may send an advertising message based on the device discovery request command, so that the current device is discovered. When the communication device is a scanner device, the underlying access technology executes a device discovery procedure based on the device discovery request command sent by the device discovery module, obtains a device discovery result, and reports the device discovery result to the device discovery module. When the underlying access technology supports a filtering function (such as the SLE access technology), the underlying access technology may also perform preliminary filtering on the device discovery result based on the filter policy, and report the device discovery result after the preliminary filtering to the device discovery module. The filter policy may be indicated by the basic communication service framework module to the underlying access technology by using the device discovery module.

The access technologies supported by the access layer may be access technologies such as an SLB access technology and an SLE access technology, or may be access technologies such as Bluetooth (Bluetooth, BT), BLE, a wireless local area network (wireless local area network, WLAN), and near field communication (near field communication, NFC).

Specifically, the SLE access technology is an access technology that can implement fast discovery and connection and has an advantage of low energy. When the SLE access technology is in a disconnected state, the advertiser device may usually select one or more advertising channels from three fixed advertising channels to sequentially send an advertising message, and the scanner device may sequentially perform scanning on the three advertising channels. When the advertising message is received through scanning, the advertiser device may be discovered. In addition, the SLE access technology may support the scanner device in continuing to send a scan request to the advertiser device after receiving the advertising message, to request the advertiser device to send more device information.

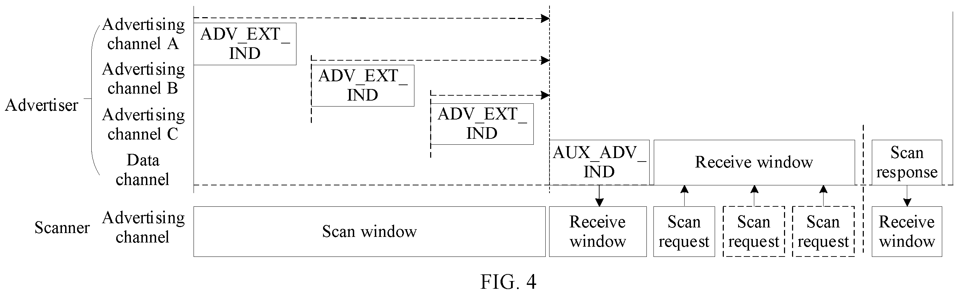

For example, as shown in FIG. 4, when the SLE access technology is in the disconnected state, the advertiser device may send an advertising message (namely, ADV_EXT_IND) on an advertising channel A, an advertising channel B, and an advertising channel C. The ADV_EXT_IND is a basic advertising type of the SLE access technology. The host may configure the advertiser device to send basic advertising on the foregoing three advertising channels based on the SLE access technology. The ADV_EXT_IND may further carry time-frequency pointer information, which is used to point to extended advertising data (namely, AUX_ADV_IND) carried on a data channel. The scanner device may select an advertising channel in a scan window for scanning. After receiving the ADV_EXT_IND, the scanner device may continue to receive the AUX_ADV_IND on the data channel based on the time-frequency pointer information, and send a scan request (scan request), to request the advertiser device to continue to send more device information. The advertiser device may receive the scan request based on a receive window. A maximum length of the receive window may be a length of 15 scan requests, and the length may be reconfigured. After receiving the scan request, the advertiser device may return a scan response (scan response) to the scanner device.

It should be noted that, in the SLE access technology, before the advertiser device establishes a connection to the scanner device, the advertiser device may send an advertising message. The advertising message may include indication information indicating that the advertiser device expects to become a resource scheduling (grant, G) device, or include indication information indicating that the advertiser device expects to become a terminal (terminal, T) device. After obtaining the advertising message through scanning, the scanner device may send a connection request to the advertiser device. The connection request may include indication information indicating that the scanner device expects to become a G device, or include indication information indicating that the scanner device expects to become a T device. After receiving the connection request, the advertiser device negotiates with the scanner device based on the connection request to determine that the advertiser device becomes a T device and the scanner device becomes a G device, and then establishes the connection; or the advertiser device negotiates with the scanner device to determine that the advertiser device becomes a G device and the scanner device becomes a T device, and then establishes the connection; or the negotiation fails, and the connection fails. When the advertiser device successfully establishes the connection to the scanner device, the device that becomes the G device may serve as a resource scheduling device to schedule a resource.

For example, the advertising message sent by the advertiser device includes indication information indicating that the advertiser device expects to become a T device. After obtaining the advertising message through scanning, the scanner device may send a connection request to the advertiser device. It is assumed that the connection request includes indication information indicating that the scanner device expects to become a G device, the advertiser device may determine, based on the connection request, that the advertiser device is a T device and the scanner device is a G device. A connection is successfully established to the scanner device, and the scanner device serves as a resource scheduling device to schedule a resource. It is assumed that the connection request includes indication information indicating that the scanner device expects to become a T device. Because both the advertiser device and the scanner device expect to become a T device, the advertiser device may determine, based on the connection request, that the advertiser device is a G device, and the scanner device becomes a T device. A connection is successfully established to the scanner device, and the advertiser device serves as a resource scheduling device to schedule a resource. Alternatively, the advertiser device may reject to become a G device. That is, the advertiser device rejects to establish a connection to the scanner device.

For another example, the advertising message sent by the advertiser device includes indication information indicating that the advertiser device expects to become a G device. After obtaining the advertising message through scanning, the scanner device may send a connection request to the advertiser device. It is assumed that the connection request includes indication information indicating that the scanner device expects to become a T device, the advertiser device may determine, based on the connection request, that the advertiser device is a G device and the scanner device is a T device. A connection is successfully established to the scanner device, and the advertiser device serves as a resource scheduling device to schedule a resource. It is assumed that the connection request includes indication information indicating that the scanner device expects to become a G device. Because both the advertiser device and the scanner device expect to become a G device, the advertiser device may determine, based on the connection request, that the advertiser device is a T device, and the scanner device becomes a G device. A connection is successfully established to the scanner device, and the scanner device serves as a resource scheduling device to schedule a resource. Alternatively, the advertiser device may reject to become a T device. That is, the advertiser device rejects to establish a connection to the scanner device.

Specifically, the SLB access technology is an access technology with a large bandwidth capability. In the SLB access technology, devices can be classified into a G device and a T device. The G device may be a resource scheduling center. In the SLB access technology, generally, the G device sends an advertising message, and the T device scans and receives the advertising message of G device. The G device does not scan and discover the T device. That is, before the SLB access technology is connected, a device discovery procedure is unidirectional, and only the T device can discover the G device.

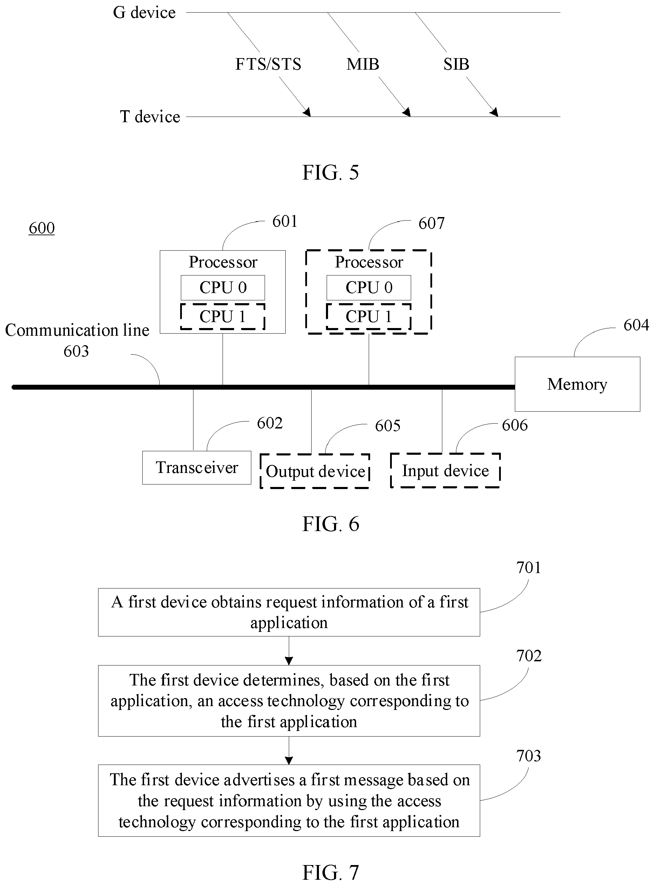

For example, as shown in FIG. 5, the G device may periodically send a first sync signal (first sync signal, FTS), a second sync signal (second sync signal, STS), a master information block (master information block, MIB) message, and a system information block (system information block, SIB) message on a fixed time-frequency domain resource. After receiving and synchronizing the FTS and the STS, the T device completes downlink synchronization, synchronously receives the MIB message, and then receives the SIB message. In this way, a synchronization procedure between the G device and the T device is completed.

During specific implementation, communication devices that use the protocol architecture shown in FIG. 3, for example, the advertiser device and the scanner device, may all use a composition structure shown in FIG. 6, or include components shown in FIG. 6. FIG. 6 is a schematic diagram of composition of a communication apparatus 600 according to an embodiment of this application. The communication apparatus 600 may be an advertiser device or a chip or a system-on-a-chip in the advertiser device. Alternatively, the communication apparatus 600 may be a scanner device or a chip or a system-on-a-chip in the scanner device. As shown in FIG. 6, the communication apparatus 600 includes a processor 601, a transceiver 602, and a communication line 603.

Further, the communication apparatus 600 may further include a memory 604. The processor 601, the memory 604, and the transceiver 602 may be connected through the communication line 603.

The processor 601 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 601 may be another apparatus having a processing function, for example, a circuit, a device, or a software module. This is not limited.

The transceiver 602 is configured to communicate with another device or another communication network. The another communication network may be an Ethernet, a radio access network (radio access network, RAN), a wireless local area network (wireless local area network, WLAN), or the like. The transceiver 602 may be a module, a circuit, a transceiver, or any apparatus that can implement communication.

The communication line 603 is configured to transmit information between components included in the communication apparatus 600.

The memory 604 is configured to store instructions. The instructions may be a computer program.

The memory 604 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Bluray disc, or the like), a magnetic disk storage medium or another magnetic storage device, or the like. This is not limited.

It should be noted that the memory 604 may be independent of the processor 601, or may be integrated with the processor 601. The memory 604 may be configured to store instructions, program code, some data, or the like. The memory 604 may be located inside the communication apparatus 600, or may be located outside the communication apparatus 600. This is not limited. The processor 601 is configured to execute the instructions stored in the memory 604, to implement a device discovery method provided in the following embodiments of this application.

In an example, the processor 601 may include one or more CPUs, for example, a CPU 0 and a CPU 1 in FIG. 6.

In an optional implementation, the communication apparatus 600 includes a plurality of processors. For example, in addition to the processor 601 in FIG. 6, the communication apparatus 600 may further include a processor 607.

In an optional implementation, the communication apparatus 600 further includes an output device 605 and an input device 606. For example, the input device 606 is a device such as a keyboard, a mouse, a microphone, or a joystick, and the output device 605 is a device such as a display or a speaker (speaker).

It should be noted that the communication apparatus 600 may be a desktop computer, a portable computer, a network server, a mobile phone, a tablet computer, a wireless terminal, an embedded device, a chip system, or a device having a similar structure in FIG. 6. In addition, the composition structure shown in FIG. 7 does not constitute a limitation on the communication apparatus. In addition to the components shown in FIG. 6, the communication apparatus may include more or fewer components than those shown in the figure, some components may be combined, or there may be a different component arrangement.

In this embodiment of this application, the chip system may include a chip, or may include a chip and another discrete device.

In addition, for operations, terms, and the like in embodiments of this application, refer to each other. This is not limited. In embodiments of this application, names of messages exchanged between devices, names of parameters in the messages, or the like are merely examples. Another name may alternatively be used during specific implementation. This is not limited.

The following describes a device discovery method provided in embodiments of this application with reference to the protocol architecture shown in FIG. 3. A first device may be any advertiser device that uses the protocol architecture shown in FIG. 3 in a communication system, and a second device may be any scanner device that uses the protocol architecture shown in FIG. 3 in the communication system. Both the first device and the second device in the following embodiments may have the components shown in FIG. 6.

FIG. 7 is a flowchart of a device discovery method applied to an advertiser device according to an embodiment of this application. As shown in FIG. 7, the method may include the following steps.

Step 701: A first device obtains request information of a first application.

The request information may indicate a discoverable level of the first device.

Specifically, the request information may be used to request the first device to announce the discoverable level of the first device to the outside. The request information may be further used to request the first device to announce device information of the first device to the outside.

The device information may be information such as a device type, a device appearance, device manufacturer information, or a device name. This is not limited.

The discoverable level may include one or more of the following: The device expects to be discovered by a previously paired device, the device expects to be discovered by a device with a designated address or service set identifier (service set identifier, SSID), the device expects to be discovered by a device that supports a specific service or capability, the device is non-discoverable, the device is generally discoverable, or the device is preferentially discoverable.

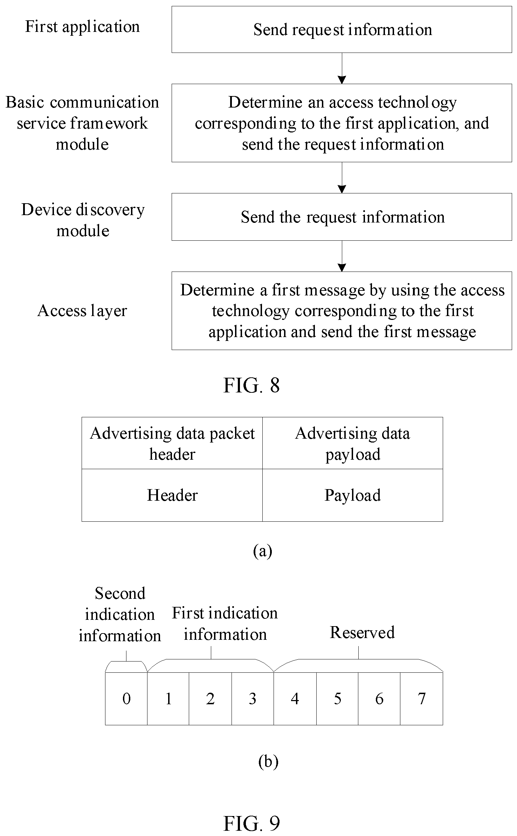

Specifically, when the first device uses the protocol structure shown in FIG. 3, as shown in FIG. 8, the foregoing discoverable levels may be configured in a device discovery module of the first device. For descriptions of the discoverable levels, refer to the following Table 2:

**Table 2**

| Discoverable level | Description |
|---|---|
| The device is non-discoverable | The device does not expect to be discovered by another device |
| The device is generally discoverable | The device expects to be discovered, but the requirement is not urgent |
| The device is preferentially discoverable | The device expects to be quickly discovered, and the requirement is urgent |
| The device expects to be discovered by a previously paired device | The paired device is a previously connected device, and a pairing record is reserved in the device, where for example, the pairing record may be a media access control (media access control, MAC) address, an internet protocol (internet protocol, IP) address, an identity (identity, ID), or the like of the previously paired device |
| The device expects to be discovered by a device with a designated address or SSID | The designated address may be a MAC address, an IP address, or the like of a designated device |
| The device expects to be discovered by a device that supports a specific service or capability | The specific service may be an audio playing service, a high-definition video playing service, or the like; and the capability may be a capability of an underlying access technology or the like |

In an example, the request information may include the discoverable level of the first device, and the first device may determine the discoverable level of the first device based on the request information.

For example, the request information may include that the device expects to be discovered by a previously paired device, and the first device may determine, based on the request information, that the discoverable level of the first device is that the device expects to be discovered by a previously paired device.

In a second example, the request information may include one or more of the following information: identification information of the previously paired device, the designated address or SSID, the specific service or capability, or the like. The first device may determine the discoverable level of the first device based on the request information.

The identification information of the device may be identity information that can be used to identify the device, such as a MAC address, an IP address, or an ID of the device. This is not limited.

For example, the request information includes an SSID. The first device may determine, based on the SSID, that the discoverable level of the first device is that the device expects to be discovered by a device with a designated address or SSID.

In a third example, the request information may further include an application requirement and/or a service type of the first application, and the first device may determine the discoverable level of the first device based on the application requirement and/or the service type of the first application.

For example, the request information includes the application requirement of the first application. It is assumed that the application requirement of the first application is to play audio. In this case, the first device may determine, based on the request information, that the discoverable level of the first device is that the device expects to be discovered by a device that supports a specific service or capability.

Based on the foregoing three examples, when the first device uses the protocol structure shown in FIG. 3, as shown in FIG. 8, a basic communication service framework module in the first device may obtain the request information of the first application, and determine the discoverable level of the first device based on the request information of the first application by invoking a discoverable level provided by the device discovery module (for example, the basic communication service framework module may obtain, by invoking an interface provided by the device discovery module, the discoverable level provided by the device discovery module).

Optionally, the request information further includes an advertising mode.

The advertising mode may be advertising or polling advertising.

Specifically, when the advertising mode is advertising, the first device may notify the outside of the discoverable level of the first device through advertising. When the advertising mode is polling advertising, the first device may notify the outside of the discoverable level of the first device through polling advertising.

Optionally, the request information further includes advertising data.

The advertising data may be a transmit power advertised by the first device, a service supported by the first device, state information of the first device, or the like. This is not limited.

For example, the first device may carry the advertising data when notifying the discoverable level of the first device to the outside.

Step 702: The first device determines, based on the first application, an access technology corresponding to the first application.

For example, the first device may determine, based on the application requirement and/or the service type of the first application, the access technology corresponding to the first application.

The application requirement of the first application may be a QoS capability requirement of the first application.

The service type of the first application may be an audio service, a video service, a call service, or the like. This is not limited. Further, the audio service may be further classified into a standard audio playing service, a lossless audio playing service, and the like, and the video service may be further classified into a high-definition video playing service, a standard video playing service, and the like.

Specifically, as shown in FIG. 8, the basic communication service framework module of the first device may determine, based on the first application, the access technology corresponding to the first application.

For example, the application requirement of the first application is to play 1080P high-definition audio, and a bandwidth requirement of audio data after coding and compression on an underlying transport channel is 5 Mbps. It is assumed that a maximum bandwidth supported by a current SLE access technology is 4 Mbps, and a maximum bandwidth supported by an SLB access technology is about 120 Mbps. In this case, the basic communication service framework module of the first device may determine that the SLB access technology can meet playing of the 1080P high-definition audio and the SLE access technology cannot meet playing of the 1080P high-definition audio, and therefore determine that the access technology corresponding to the first application is the SLB access technology.

For another example, the service type of the first application is a standard audio playing service. It is assumed that the standard audio playing service corresponds to an SLE access technology. In this case, the basic communication service framework module of the first device may determine that the access technology corresponding to the first application is the SLE access technology.

Step 703: The first device advertises a first message based on the request information by using the access technology corresponding to the first application.

As shown in FIG. 8, after determining the access technology corresponding to the first application, the basic communication service framework module of the first device may indicate, to the device discovery module, the access technology corresponding to the first application. The device discovery module may further indicate, to an access layer, the access technology corresponding to the first application, and the access layer determines and advertises the first message.

Specifically, the basic communication service framework module may indicate, in the request information, the access technology corresponding to the first application, convert the request information into request information that can be received by the device discovery module, and send the request information to the device discovery module. The device discovery module may determine, based on the received request information, the access technology corresponding to the first application, encapsulate a related parameter, convert the received request information into request information that can be received by the access layer, and send the request information to the access layer. The access layer determines the first message based on the request information, and advertises the first message.

For example, the access technology determined by the basic communication service framework module of the first device is the SLE access technology. The basic communication service framework module may indicate the SLE access technology in the request information, convert the request information into request information that can be received by the device discovery module, and send the request information to the device discovery module. The device discovery module encapsulates a related parameter based on the SLE access technology indicated in the received request information, converts the received request information into request information that can be received by the access layer, and sends the request information to the access layer. The access layer configures and advertises the first message based on the SLE access technology.

The first message may include first indication information, and the first indication information may indicate the discoverable level of the first device.

Specifically, the basic communication service framework module of the first device may further include the discoverable level of the first device in the request information and send the request information to the device discovery module. The device discovery module includes the discoverable level of the first device in the request information and sends the request information to the access layer. The access layer determines the first indication information based on the discoverable level of the first device.

For example, as shown in (a) in FIG. 9, the first device may include the first message in an advertising data payload of the advertising data for advertising.

As shown in (a) in FIG. 9, the advertising data may include an advertising data packet header and the advertising data payload.

Specifically, the first device may add advertising data of an advertising attribute type to the advertising data payload, and configure a corresponding bit to indicate the first indication information.

For example, a length of the advertising data of the advertising attribute type is 1 byte, and 3 bits in the byte may be used as the first indication information to indicate the discoverable level of the first device.

For example, as shown in (b) in FIG. 9, bits 1 to 3 may be used as the first indication information to indicate the discoverable level of the first device. Refer to the following Table 3. When bit values of the bits 1 to 3 are sequentially 000, 001, 010, ..., and 101, the discoverable level of the first device may be sequentially indicated as follows: The device is non-discoverable, the device is generally discoverable, the device is preferentially discoverable, the device expects to be discovered by a previously paired device, the device expects to be discovered by a device with a designated address or SSID, or the device expects to be discovered by a device that supports a specific service or capability.

**Table 3**

| Data type | Bit value | Description | Requirement |
|---|---|---|---|
| Advertising attribute type | 000 | The device is non-discoverable | Mandatory support |
| | 001 | The device is generally discoverable | Mandatory support |
| | 010 | The device is preferentially discoverable | Optional support |
| | 011 | The device expects to be discovered by a previously paired device | Optional support |
| | 100 | The device expects to be discovered by a device with a designated address or SSID | Optional support |
| | 101 | The device expects to be discovered by a device that supports a specific service or capability | Optional support |

It should be noted that the discoverable level that is of the first device and that is indicated in the first message may be mandatory support, or may be optional support. Table 3 is merely an example for description. This is not limited.

The first device (for example, a temperature sensor device) having a simple function requirement only needs to support a mandatory support type, to reduce design complexity of the first device. The first device (for example, a true wireless stereo (true wireless stereo, TWS) headset) having powerful functions may select to support a plurality of types, including a mandatory support type and an optional support type, to meet more abundant service requirements.

Optionally, the first message further includes one or more of the following information: the identification information of the previously paired device, the designated address or SSID, or the specific service or capability.

The access layer of the first device may include the foregoing information in the advertising data payload.

For example, when the discoverable level of the first device is that the device expects to be discovered by a previously paired device, the first message may include the identification information of the previously paired device. When the discoverable level of the first device is that the device expects to be discovered by a device with a designated address or SSID, the first message may include the specified address or SSID. When the discoverable level of the first device is that the device expects to be discovered by a device that supports a specific service or capability, the first message may include the specific service or capability.

When the first message includes one or more of the foregoing information, a device that receives the first message may determine, based on the first message, whether the device is a device expected by the first device. If yes, the device may discover the first device and communicate with the first device. Otherwise, the device does not discover the first device. In other words, the first device is removed from a list of discovered devices or the first device is not determined as a discovered device.

Optionally, the first message further includes second indication information.

The second indication information may indicate whether the first message is a polling advertising message.

Specifically, the first device may determine, based on the advertising mode indicated by the first application, whether to set the first message as a polling advertising message, or the first device may determine, based on the application requirement, the service type, and/or the like of the first application, whether to set the first message as a polling advertising message.

For example, the length of the advertising data of the advertising attribute type is 1 byte, and 1 bit in the byte may be used as the second indication information to indicate whether the first message is a polling advertising message.

For example, as shown in (b) in FIG. 9, a bit 0 may be used as the second indication information to indicate whether the first message is a polling advertising message. For example, the bit 0 may be set to 0 to indicate that the first message is a polling advertising message, and the bit 0 may be set to 1 to indicate that the first message is not a polling advertising message. Alternatively, the bit 0 may also be set to 1 to indicate that the first message is a polling advertising message, and the bit 0 may be set to 0 to indicate that the first message is not a polling advertising message.

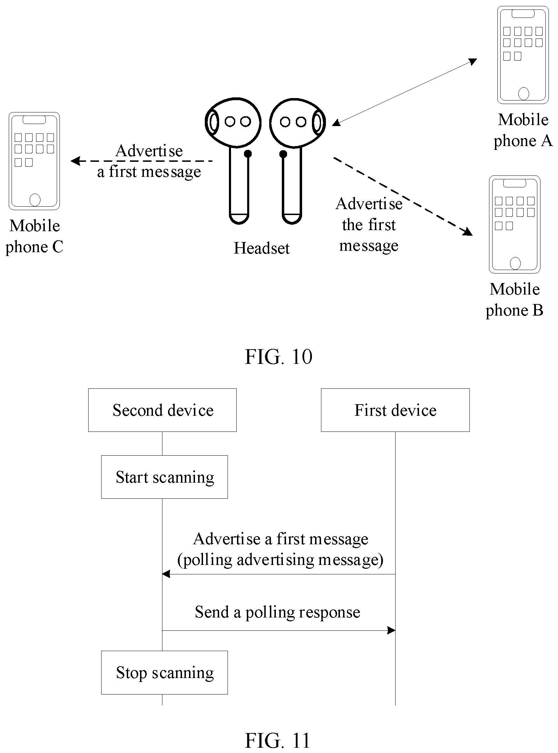

For example, as shown in FIG. 10, the first device is a TWS headset supporting dual connectivity, second devices include a mobile phone A, a mobile phone B, and a mobile phone C, and the headset is connected to the mobile phone A. When the headset expects to be discovered by a previously paired device, the headset may include, in a first message, first indication information configured to be that the device expects to be discovered by a previously paired device, and advertise the first message. It is assumed that the mobile phone C is a device that is previously paired with the headset, and the mobile phone B is not previously paired with the headset. When the mobile phone B and the mobile phone C scan the first message sent by the headset, the mobile phone C may determine, based on the first message, that the mobile phone C is a device that is previously paired with the headset, and further discover the headset and is connected to the headset. This prevents the headset from being rejected by the mobile phone C in a procedure of establishing a connection to the mobile phone C. In addition, the mobile phone B may determine that the mobile phone B is not previously paired with the headset (or it may be described as that the mobile phone B may identify that the headset is a non-discoverable device for the mobile phone B). If the mobile phone B attempts to establish a connection to the headset, the mobile phone B is rejected by the headset. Therefore, the mobile phone B does not attempt to establish a connection to the headset.

Based on the method shown in FIG. 7, the first device may dynamically schedule a plurality of access technologies based on an application, to meet diversified requirements for power consumption and bandwidths of different services or a same service in different communication scenarios. In addition, a plurality of discoverable levels are provided for the first device, so that more device discovery modes and device discovery procedures can be supported, to meet requirements of more device discovery scenarios.

Further, as shown in FIG. 11, a second device may scan the first message advertised by the first device. When the second indication information in the first message scanned by the second device indicates that the first message is a polling advertising message, the second device may send a polling response to the first device.

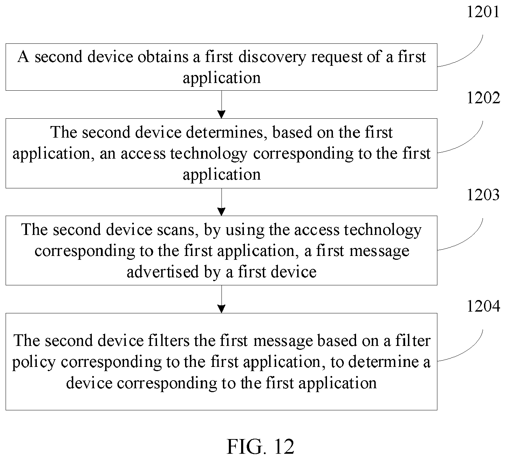

The second device may scan, with reference to the following device discovery method shown in FIG. 12, the first message advertised by the first device. Details are not described herein.

Specifically, when the second device obtains, through scanning, the first message advertised by the first device, the second device may parse the first message, and determine, based on the second indication information in the first message, whether the first message is a polling advertising message.

Optionally, when the second device determines that the first device is a device corresponding to the first application, the second device sends a polling response to the first device.

For example, the second device may determine, based on the discoverable level in the first message obtained through scanning, whether the first device is the device corresponding to the first application.

The polling response may be a scan request, and the first device may discover the second device based on the polling response.

Based on the method shown in FIG. 11, when the second device is a hidden device (that is, a device that does not send an advertising message, but only performs scanning and receives polling), the first device may discover the hidden device based on a polling response sent by the hidden device.

In correspondence to the device discovery method applied to the advertiser device (namely, the first device) shown in FIG. 7, as shown in FIG. 12, the scanner device (namely, the second device) may scan the first message advertised by the advertiser device, to discover the advertiser device.

FIG. 12 shows a device discovery method applied to a scanner device according to an embodiment of this application. As shown in FIG. 12, the method may include the following steps.

Step 1201: A second device obtains a first discovery request of a first application.

The first discovery request may be used to request to discover a device corresponding to the first application.

Specifically, the device corresponding to the first application may be a device that executes the first application.

The first discovery request may include information such as an application requirement, a service type, and/or the like of the first application.

Step 1202: The second device determines, based on the first application, an access technology corresponding to the first application.

For example, the second device may determine, based on the application requirement and/or the service type of the first application, the access technology corresponding to the first application.

Specifically, for specific descriptions of determining, by the second device, the access technology corresponding to the first application, refer to related descriptions of determining, by the first device, the access technology corresponding to the first application in step 702. Details are not described herein.

Step 1203: The second device scans, by using the access technology corresponding to the first application, the first message advertised by the first device.

For specific descriptions of the first message, refer to related descriptions of the first message in step 703. Details are not described herein.

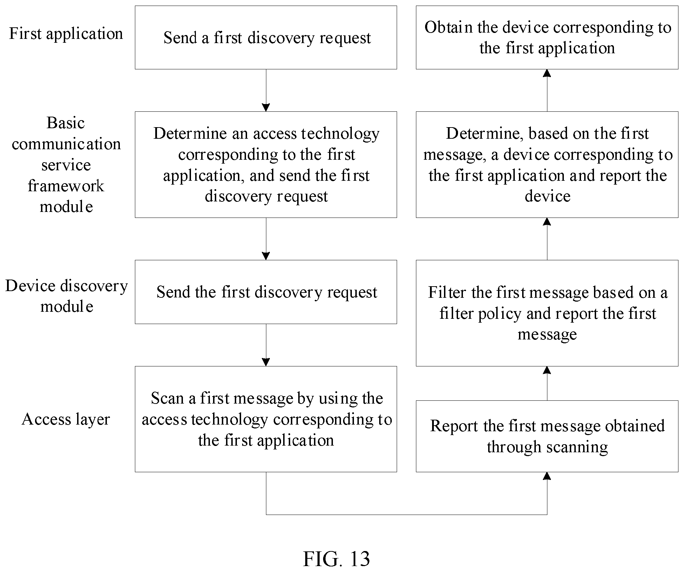

Specifically, as shown in FIG. 13, after determining the access technology corresponding to the first application, a basic communication service framework module of the second device may indicate, to a device discovery module, the access technology corresponding to the first application. The device discovery module may further indicate, to an access layer, the access technology corresponding to the first application, and the access layer scans, based on the access technology corresponding to the first application, the first message advertised by the first device.

Specifically, the basic communication service framework module may indicate, in the first discovery request, the access technology corresponding to the first application, convert the first discovery request into a first discovery request that can be received by the device discovery module, and send the first discovery request to the device discovery module. The device discovery module may determine, based on the received first discovery request, the access technology corresponding to the first application, encapsulate a related parameter, convert the received first discovery request into a first discovery request that can be received by the access layer, and send the first discovery request to the access layer. The access layer scans the first message based on the first discovery request.

For example, the access technology determined by the basic communication service framework module of the second device is an SLE access technology. The basic communication service framework module may indicate the SLE access technology in the first discovery request, convert the first discovery request into a first discovery request that can be received by the device discovery module, and send the first discovery request to the device discovery module. The device discovery module encapsulates a related parameter based on the SLE access technology indicated in the received first discovery request, converts the received first discovery request into a first discovery request that can be received by the access layer, and sends the first discovery request to the access layer. The access layer scans the first message based on the SLE access technology.

Step 1204: The second device filters the first message based on a filter policy corresponding to the first application, to determine the device corresponding to the first application.

Specifically, as shown in FIG. 13, when obtaining, through scanning based on the access technology corresponding to the first application, the first message advertised by the first device, the access layer may report the first message obtained through scanning to the device discovery module. The device discovery module filters the first message based on the filter policy corresponding to the first application, and reports a filter result to the basic communication service framework module. The basic communication service framework module determines, based on the filter result, the device corresponding to the first application.

The filter policy includes one or more of the following: discovering the previously paired device, discovering the device with the designated address or SSID, discovering the device that supports the specific service or capability, discovering a device within a specific range, disabling filtering, discovering a discoverable device, or discovering a preferential device.

Specifically, when the second device uses the protocol structure shown in FIG. 3, as shown in FIG. 13, the foregoing filter policy may be configured in the device discovery module of the second device. For details about the description of each filter policy, refer to the following Table 4:

**Table 4**

| Filter policy | Function description | Requirement |
|---|---|---|
| Disable filtering | That is, the device discovery module receives all advertising messages obtained by the access layer through scanning or all received polling responses, and uploads the advertising messages or the polling responses to the basic communication service framework module | Mandatory support |
| Discover a discoverable device | That is, a discoverable device is obtained through filtering, where the discoverable device includes a general discoverable device, a preferential discoverable device, a previously paired device, or a device directed to the second device | Mandatory support |
| Discover a preferential device | That is, a preferential discoverable device is obtained through filtering | Optional support |
| Discover a device that supports a specific service or capability | That is, a device that supports a specific service or capability required by an application is obtained through filtering | Optional support |
| Discover the previously paired device | That is, a previously paired device is obtained through filtering, where the previously paired device is a device that has been connected to the device and stores a pairing record | Optional support |
| Discover a device with a designated address or SSID | That is, a device with a designated address or SSID is obtained through filtering | Optional support |
| Discover a device within a specific range | That is, a distance of a peripheral device is calculated, and a device that meets a distance requirement is obtained through filtering | Optional support |

For discovering a device within a specific range, the second device may calculate the distance between the peripheral device and the second device based on parameters such as advertising transmit power and signal strength, and obtain the device that meets the distance requirement.

It should be noted that the filter policy may be mandatory support, or may be optional support. Table 4 is merely an example for description. This is not limited.

The second device (for example, a smart water meter reader) having a simple function requirement can meet a service requirement by supporting only some types, and does not need to support all types, to reduce design complexity of the second device. The second device (for example, an in-vehicle infotainment system or a mobile phone) having powerful functions may select to support all types, to meet more abundant service requirements.

For example, as shown in FIG. 13, the first discovery request of the first application may be obtained by the basic communication service framework module in the second device, and the filter policy provided by the device discovery module is invoked based on the application requirement and/or the service type of the first application (for example, the basic communication service framework module may obtain the filter policy provided by the device discovery module by invoking an interface provided by the device discovery module). That is, the filter policy corresponding to the first application is determined.

As shown in FIG. 13, after determining the filter policy corresponding to the first application, the basic communication service framework module of the second device may indicate the filter policy corresponding to the first application to the device discovery module of the second device. The device discovery module may filter, based on the filter policy corresponding to the first application, first messages reported by the access layer, and report a first message obtained through filtering to the basic communication service framework module. The basic communication service framework module determines, based on the first message obtained through filtering, the device corresponding to the first application.

Based on the foregoing description of the filter policy, the first discovery request may further include one or more of the following information: identification information of the previously paired device, the designated address or SSID, or the specific service or capability.

The device discovery module of the second device may filter the first messages based on the first discovery request and the filter policy corresponding to the first application.

For example, the first discovery request includes an SSID 1, an SSID 2, and an SSID 3, and the filter policy corresponding to the first application is to discover a device with a designated address or SSID. The device discovery module of the second device may obtain, through filtering based on the first discovery request and the filter policy corresponding to the first application, a first message with an SSID being the SSID 1, the SSID 2, or the SSID 3 in the first messages reported by the access layer, and report the first message obtained through filtering to the basic communication service framework module. The basic communication service framework module determines, based on the first message obtained through filtering, the device corresponding to the first application.

Optionally, the device discovery module determines whether the first messages are filtered by the device discovery module based on the filter policy; or the first messages are filtered by the access layer based on the filter policy; or the first messages are filtered by the device discovery module and the access layer based on the filter policy.

When the first messages are filtered by the device discovery module based on the filter policy, the access layer may report the first messages obtained through scanning to the device discovery module, and the device discovery module filters the first messages based on the filter policy.

When the first messages are filtered by the access layer based on the filter policy, the device discovery module may indicate the filter policy to the access layer. The access layer filters the first messages obtained through scanning, and reports a first message obtained through filtering to the device discovery module. The device discovery module reports the received first message to the basic communication service framework module.

When the first messages are filtered by the device discovery module and the access layer based on the filter policy, the device discovery module may indicate the filter policy to the access layer. The access layer performs preliminary filtering on the first messages obtained through scanning, and reports a first message obtained after the preliminary filtering to the device discovery module. The device discovery module filters the received first message based on the filter policy, and reports a filter result to the basic communication service framework module.

For example, after receiving the first message reported by the device discovery module, the basic communication service framework module may determine a device corresponding to the first message as the device corresponding to the first application.

Based on the method shown in FIG. 12, the second device may dynamically schedule a plurality of access technologies based on an application, to meet diversified requirements for power consumption and bandwidths of different services or a same service in different communication scenarios. In addition, a plurality of filter policies are provided for the second device, so that more device discovery modes and device discovery procedures can be supported, to meet requirements of more device discovery scenarios.

Further, when the second device obtains discovery requests of a plurality of applications, the second device may arbitrate and merge the discovery requests of the plurality of applications, to reduce a quantity of times of performing the foregoing device discovery method by the second device, and reduce power consumption of the second device. Particularly, a quantity of times of performing the foregoing device discovery method by the access layer in the second device is reduced, or overlapping commands executed by the access layer are reduced, and power consumption of the second device is reduced.

The discovery requests of the plurality of applications may be arbitrated and merged by the basic communication service framework module of the second device. Alternatively, the discovery requests of the plurality of applications may be arbitrated and merged by the device discovery module of the second device. This is not limited.

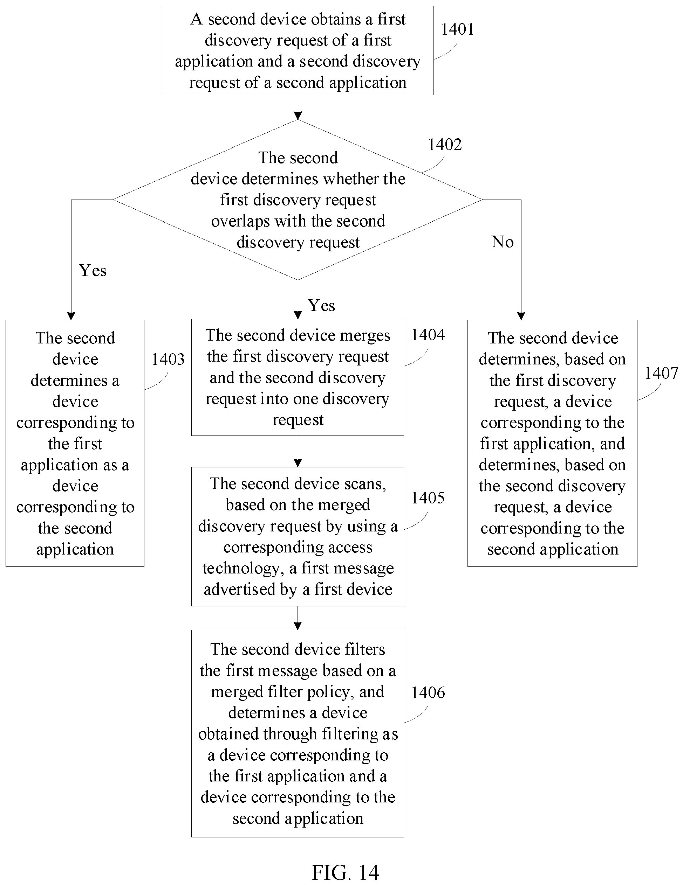

As shown in FIG. 14, an example in which the second device obtains the first discovery request of the first application and a second discovery request of a second application is used, to describe how the second device arbitrates and merges the discovery requests of the plurality of applications.

FIG. 14 is a flowchart of an arbitration and merging method according to this application. As shown in FIG. 14, the method may include the following steps.

Step 1401: A second device obtains a first discovery request of a first application and a second discovery request of a second application.

The first discovery request is used to request to discover a device corresponding to the first application; and the second discovery request is used to request to discover a device corresponding to the second application.

It should be noted that the second device may first obtain the first discovery request of the first application, and then obtain the second discovery request of the second application after a period of time; or the second device may simultaneously obtain the first discovery request of the first application and the second discovery request of the second application. This is not limited.

Step 1402: The second device determines whether the first discovery request overlaps with the second discovery request. If yes, perform the following step 1403, or perform the following step 1404 to step 1406; otherwise, perform the following step 1407.

When the first discovery request is completely consistent with the second discovery request, it may be determined that the first discovery request overlaps with the second discovery request. Alternatively, when a device type of the first discovery request is consistent with that of the second discovery request, it may also be determined that the first discovery request overlaps with the second discovery request.

For example, the first discovery request is used to request to discover an SLB Internet access device, and the second discovery request is used to request to discover an SLB projectable device. Because both the device corresponding to the first discovery request and the device corresponding to the second discovery request are SLB devices, it may be determined that the first discovery request overlaps with the second discovery request.

Based on a fact that the second device has obtained the first discovery request, when receiving the second discovery request, the second device may determine whether the second discovery request overlaps with the first discovery request. Alternatively, after receiving the second discovery request, the second device may wait for a period of time, and determine all discovery requests received in the time period, to determine whether there is an overlapping discovery request.

Step 1403: If the first discovery request overlaps with the second discovery request, the second device determines the device corresponding to the first application as the device corresponding to the second application.

For example, when the second device first obtains the first discovery request of the first application, and determines, based on the first discovery request, the device corresponding to the first application, if the second device then obtains the second discovery request of the second application, and the second discovery request overlaps with the first discovery request, the second device may determine the device corresponding to the first application as the device corresponding to the second application.

In another example, when the second device first obtains the first discovery request of the first application, and performs the device discovery method based on the first discovery request, if the second device then obtains the second discovery request of the second application, and the second discovery request overlaps with the first discovery request, the second device may determine, after the device discovery method corresponding to the first discovery request ends, the device corresponding to the first application as the device corresponding to the second application.

In still another example, when the second device simultaneously obtains the first discovery request of the first application and the second discovery request of the second application, and the second discovery request overlaps with the first discovery request, the second device may perform the device discovery method based on the first discovery request, determine the device corresponding to the first application, and determine the device corresponding to the first application as the device corresponding to the second application.

Step 1404: The second device merges the first discovery request and the second discovery request into one discovery request.

For example, the first discovery request is used to request to discover an SLB Internet access device, and the second discovery request is used to request to discover an SLB projectable device. The merged discovery request may be used to request to discover an SLB device.

Step 1405: The second device scans, based on the merged discovery request by using a corresponding access technology, a first message advertised by a first device.

The corresponding access technology may be an access technology corresponding to both the first application and the second application.

Step 1406: The second device filters the first message based on a merged filter policy, and determines a device obtained through filtering as a device corresponding to the first application and a device corresponding to the second application.

In a possible design, the merged filter policy is a filter policy obtained by merging a filter policy corresponding to the first application and a filter policy corresponding to the second application.

The second device may determine, based on the first discovery request, the filter policy corresponding to the first application, determine, based on the second discovery request, the filter policy corresponding to the second application, and merge the filter policy corresponding to the first application and the filter policy corresponding to the second application as a filter policy for filtering the first message.

For example, the first discovery request is used to request to discover an SLB Internet access device, and the second discovery request is used to request to discover an SLB projectable device. The second device may determine that the filter policy corresponding to the first application may be to discover a device that supports a specific service or capability, where the specific service or capability is to support an SLB access technology and support Internet access, and determine that the filter policy corresponding to the second application is to discover a device that supports a specific service or capability, where the specific service or capability is to support the SLB access technology and support projection. After the filter policy corresponding to the first application and the filter policy corresponding to the second application are merged, it may be determined that the merged filter policy is to discover a device that supports a specific service or capability, where the specific service or capability is to support the SLB access technology.

In another possible design, the filter policy is a filter policy corresponding to the merged discovery request.

The second device may determine a filter policy based on the merged discovery request. For example, the first discovery request is used to request to discover an SLB Internet access device, and the second discovery request is used to request to discover an SLB projectable device. The second device may determine that the merged discovery request is used to request to discover an SLB device, and further determine that a filter policy corresponding to the merged discovery request is to discover a device that supports a specific service or capability, where the specific service or capability is to support an SLB access technology.

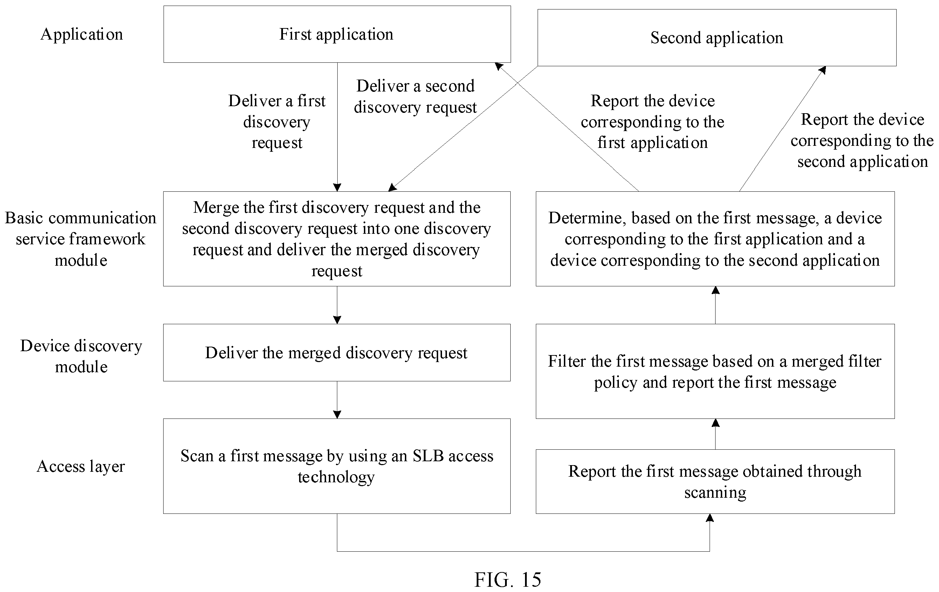

For example, as shown in FIG. 15, the second device is a mobile phone, a first application in the mobile phone delivers a first discovery request for searching for an SLB Internet access device, and a second application delivers a second discovery request for searching for an SLB projectable device. A basic communication service framework module in the mobile phone may merge the first discovery request and the second discovery request into a discovery request for searching for an SLB device, and deliver the merged discovery request to a device discovery module. The device discovery module converts the received discovery request into a discovery request that can be received by an access layer, and sends the discovery request to the access layer. The access layer scans first messages based on the discovery request by using the SLB access technology, and reports the first messages obtained through scanning to the device discovery module. The device discovery module filters the first messages based on the merged filter policy, and reports a first message obtained through filtering to the basic communication service framework module. The basic communication service framework module determines, based on a device corresponding to the first message, the SLB Internet access device as the device corresponding to the first application, and reports the device to the first application, and determines the SLB projectable device as the device corresponding to the second application, and reports the device to the second application.

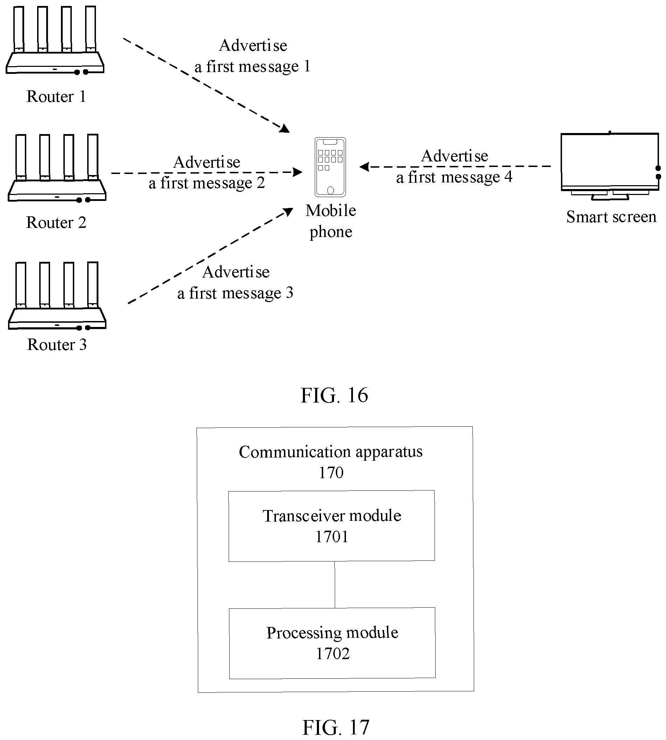

For example, as shown in FIG. 16, the first device includes a router 1, a router 2, a router 3, and a smart screen, and the second device is a mobile phone. The router 1 may advertise a first message 1, the router 2 may advertise a first message 2, the router 3 may advertise a first message 3, and the smart screen may advertise a first message 4. It is assumed that first messages obtained through scanning at the access layer of the second device include the first message 1, the first message 2, the first message 3, and the first message 4. The access layer may report the first message 1, the first message 2, the first message 3, and the first message 4 to the device discovery module. It is assumed that the router 1 and the router 2 are SLB Internet access devices, and the smart screen is an SLB projectable device, the device discovery module may obtain the first message 1, the first message 2, and the first message 4 through filtering based on the merged filter policy, and report the first message 1, the first message 2, and the first message 4 to the basic communication service framework module. The basic communication service framework module determines, based on the first message 1 and the first message 2, the router 1 and the router 2 as the device corresponding to the first application, and reports the device to the first application; and determines, based on the first message 4, the smart screen as the device corresponding to the second application, and reports the device to the second application.

Step 1407: The second device determines, based on the first discovery request, a device corresponding to the first application, and determines, based on the second discovery request, a device corresponding to the second application.

When the first discovery request does not overlap with the second discovery request, the second device may perform the device discovery method shown in FIG. 12, and determine, based on the first discovery request, the device corresponding to the first application. The second device may also perform the device discovery method shown in FIG. 12, and determine, based on the second discovery request, the device corresponding to the second application.

Based on the method shown in FIG. 14, when the second device obtains discovery requests of a plurality of applications, the second device may arbitrate and merge the discovery requests of the plurality of applications, to reduce a quantity of times of performing the foregoing device discovery method by the second device, and reduce power consumption of the second device.

Further, the second device may further set a label for each application based on an application requirement of each application, and subsequently may distribute a device discovery result to each application based on the label.

The device discovery result may include a device determined by the basic communication service framework module of the second device based on the first message.

Labels corresponding to applications whose discovery requests overlap may be the same.

For example, applications include a first application, a second application, and a third application. It is assumed that a first discovery request of the first application overlaps with a second discovery request of the second application, and a third discovery request of the third application does not overlap with the first discovery request and the second discovery request, the second device may set a first label for the first application and the second application, and set a second label for the third application. When performing the foregoing device discovery method and determining one or more devices based on the first discovery request or the second discovery request, the second device may report, based on the first label, the determined one or more devices to an application corresponding to the first label (for example, the first application, the second application, or an application whose label is the first label). When performing the foregoing device discovery method and determining one or more devices based on the third discovery request, the second device may report, based on the second label, the determined one or more devices to an application corresponding to the second label (for example, the third application or an application whose label is the second label).

The foregoing mainly describes the solutions provided in embodiments of this application from a perspective of interaction between devices. It may be understood that, to implement the foregoing functions, each device includes corresponding hardware structures and/or software modules for performing the functions. It should be readily appreciated by a person skilled in the art that algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of each device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into the modules is an example and is merely logical function division. During actual implementation, there may be another division manner.

When each functional module is obtained through division based on each corresponding function, FIG. 17 shows a communication apparatus 170. When the communication apparatus 170 is configured to be discovered by another device, the communication apparatus 170 may perform actions performed by the first device in FIG. 7 to FIG. 16. When the communication apparatus 170 is configured to discover another device, the communication apparatus 170 may perform actions performed by the second device in FIG. 7 to FIG. 16.

The communication apparatus 170 may include a transceiver module 1701 and a processing module 1702. For example, the communication apparatus 170 may be a communication apparatus, or may be a chip used in the communication apparatus, or another combined device or component that has a function of the communication apparatus. When the communication apparatus 170 is a communication apparatus, the transceiver module 1701 may be a transceiver, and the transceiver may include an antenna, a radio frequency circuit, and the like; and the processing module 1702 may be a processor (or a processing circuit), for example, a baseband processor, and the baseband processor may include one or more CPUs. When the communication apparatus 170 is a component having a function of the communication apparatus, the transceiver module 1701 may be a radio frequency unit; and the processing module 1702 may be a processor (or a processing circuit), for example, a baseband processor. When the communication apparatus 170 is a chip system, the transceiver module 1701 may be an input/output interface of a chip (for example, a baseband chip); and the processing module 1702 may be a processor (or a processing circuit) of the chip system, and may include one or more central processing units. It should be understood that the transceiver module 1701 in this embodiment of this application may be implemented by a transceiver or a transceiver-related circuit assembly; and the processing module 1702 may be implemented by a processor or a processor-related circuit assembly (or referred to as a processing circuit).

For example, the transceiver module 1701 may be configured to perform all receiving and sending operations performed by the communication apparatus in embodiments shown in FIG. 7 to FIG. 16, and/or configured to support another process of the technology described in this specification. The processing module 1702 may be configured to perform all operations performed by the communication apparatus in embodiments shown in FIG. 7 to FIG. 16 except the receiving and sending operations, and/or configured to support another process of the technology described in this specification.

In another possible implementation, the transceiver module 1701 in FIG. 17 may be replaced with a transceiver, and a function of the transceiver module 1701 may be integrated into the transceiver; and the processing module 1702 may be replaced with a processor, and a function of the processing module 1702 may be integrated into the processor. Further, the communication apparatus 170 shown in FIG. 17 may further include a memory. When the transceiver module 1701 is replaced with the transceiver, and the processing module 1702 is replaced with the processor, the communication apparatus 170 in this embodiment of this application may be the communication apparatus shown in FIG. 6.

An embodiment of this application further provides a computer-readable storage medium. All or some of the procedures in the foregoing method embodiments may be implemented by a computer program instructing related hardware. The program may be stored in the foregoing computer-readable storage medium. When the program is executed, the procedures of the foregoing method embodiments may be included. The computer-readable storage medium may be an internal storage unit of a terminal (including a data transmitting end and/or a data receiving end) in any one of the foregoing embodiments, for example, a hard disk or a memory of the terminal. Alternatively, the computer-readable storage medium may be an external storage device of the terminal, for example, a plug-in hard disk, a smart media card (smart media card, SMC), a secure digital (secure digital, SD) card, a flash card (flash card), or the like that is configured on the terminal. Further, the computer-readable storage medium may alternatively include both the internal storage unit and the external storage device of the terminal. The computer-readable storage medium is configured to store the computer program and other programs and data that are needed by the terminal. The computer-readable storage medium may be further configured to temporarily store data that has been output or is to be output.

It should be noted that, in the specification, claims, and accompanying drawings of this application, terms such as "first" and "second" are intended to distinguish between different objects but do not indicate a particular order. In addition, terms "include", "have", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

Based on the foregoing descriptions of the implementations, a person skilled in the art may clearly understand that, for the purpose of convenient and brief description, division of the foregoing functional modules is merely used as an example for description. During actual application, the foregoing functions can be allocated to different functional modules and implemented based on a requirement. That is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. Indirect couplings or communication connections between apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual requirement to achieve objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A device discovery method, comprising:
obtaining, by a first device, request information of a first application, wherein the request information indicates a discoverable level of the first device;
determining, by the first device based on the first application, an access technology corresponding to the first application; and
advertising, by the first device, a first message based on the request information by using the access technology corresponding to the first application, wherein the first message comprises first indication information, and the first indication information indicates the discoverable level of the first device.

2. The method according to claim 1, wherein
the discoverable level comprises one or more of the following: the device expects to be discovered by a previously paired device, the device expects to be discovered by a device with a designated address or service set identifier SSID, the device expects to be discovered by a device that supports a specific service or capability, the device is non-discoverable, the device is generally discoverable, or the device is preferentially discoverable.

3. The method according to claim 2, wherein
the first message further comprises one or more of the following: identification information of the previously paired device, the designated address or SSID, or the specific service or capability.

4. The method according to any one of claims 1 to 3, wherein the determining, by the first device based on the first application, an access technology corresponding to the first application comprises:
determining, by the first device based on an application requirement and/or a service type of the first application, the access technology corresponding to the first application.

5. The method according to any one of claims 1 to 4, wherein
the first message further comprises second indication information, wherein the second indication information indicates whether the first message is a polling advertising message.

6. The method according to claim 5, wherein when the first message is a polling advertising message, the method further comprises:
receiving, by the first device, a polling response from a second device; and
discovering, by the first device, the second device based on the polling response.

7. A device discovery method, comprising:
obtaining, by a second device, a first discovery request of a first application, wherein the first discovery request is used to request to discover a device corresponding to the first application;
determining, by the second device based on the first application, an access technology corresponding to the first application;
scanning, by the second device by using the access technology corresponding to the first application, a first message advertised by a first device, wherein the first message comprises first indication information, and the first indication information indicates a discoverable level of the first device; and
filtering, by the second device, the first message based on a filter policy corresponding to the first application, to determine the device corresponding to the first application.

8. The method according to claim 7, wherein the determining, by the second device based on the first application, an access technology corresponding to the first application comprises:
determining, by the second device based on an application requirement and/or a service type of the first application, the access technology corresponding to the first application.

9. The method according to claim 7 or 8, wherein
the discoverable level comprises one or more of the following: the device expects to be discovered by a previously paired device, the device expects to be discovered by a device with a designated address or service set identifier SSID, the device expects to be discovered by a device that supports a designated service or capability, the device is non-discoverable, the device is generally discoverable, or the device is preferentially discoverable.

10. The method according to claim 9, wherein
the first message further comprises one or more of the following: identification information of the previously paired device, the designated address or SSID, or the specific service or capability.

11. The method according to any one of claims 7 to 10, wherein
the filter policy comprises one or more of the following: discovering the previously paired device, discovering the device with the designated address or SSID, discovering the device that supports the specific service or capability, discovering a device within a specific range, disabling filtering, discovering a discoverable device, or discovering a preferential device.

12. The method according to any one of claims 7 to 11, wherein
the first message further comprises second indication information, wherein the second indication information indicates whether the first message is a polling advertising message.

13. The method according to claim 12, wherein when the first message is a polling advertising message, the method further comprises:
when the second device determines that the first device is the device corresponding to the first application, sending, by the second device, a polling response to the first device.

14. The method according to any one of claims 7 to 13, wherein the method further comprises:
obtaining, by the second device, a second discovery request of a second application, wherein the second discovery request is used to request to discover a device corresponding to the second application;
determining, by the second device, whether the first discovery request overlaps with the second discovery request; and
if the first discovery request overlaps with the second discovery request, determining, by the second device, the device corresponding to the first application as the device corresponding to the second application; or
merging, by the second device, the first discovery request and the second discovery request into one discovery request; scanning, based on the merged discovery request by using the access technology corresponding to the first application, the first message advertised by the first device; and filtering the first message based on a merged filter policy, and determining a device obtained through filtering as the device corresponding to the first application and the device corresponding to the second application, wherein the merged filter policy is a filter policy obtained by merging the filter policy corresponding to the first application and a filter policy corresponding to the second application, or the merged filter policy is a filter policy corresponding to the merged discovery request.

15. The method according to any one of claims 7 to 14, wherein the method further comprises:
determining, by the second device, a first label based on the first application, wherein labels corresponding to applications whose discovery requests overlap are the same; and
filtering, by the second device, the first message based on the filter policy corresponding to the first application, and determining a device obtained through filtering as a device corresponding to an application indicated by the first label.

16. A communication apparatus, comprising:
a transceiver module, configured to obtain request information of a first application, wherein the request information indicates a discoverable level of the first device; and
a processing module, configured to determine, based on the first application, an access technology corresponding to the first application, wherein
the transceiver module is further configured to advertise a first message based on the request information by using the access technology corresponding to the first application, wherein the first message comprises first indication information, and the first indication information indicates the discoverable level of the first device.

17. A communication apparatus, comprising:
a transceiver module, configured to obtain a first discovery request of a first application, wherein the first discovery request is used to request to discover a device corresponding to the first application; and
a processing module, configured to determine, based on the first application, an access technology corresponding to the first application, wherein
the transceiver module is further configured to scan, by using the access technology corresponding to the first application, a first message advertised by a first device, wherein the first message comprises first indication information, and the first indication information indicates a discoverable level of the first device; and
the processing module is further configured to filter the first message based on a filter policy corresponding to the first application, to determine the device corresponding to the first application.

18. A communication apparatus, wherein the communication apparatus comprises a processor; and the processor is configured to run a computer program or instructions, so that the device discovery method according to any one of claims 1 to 6 is performed, or the device discovery method according to any one of claims 7 to 15 is performed.

19. A communication apparatus, wherein the communication apparatus comprises a processor and a communication interface; and the communication interface is coupled to the processor, and the processor is configured to run a computer program or instructions, so that the device discovery method according to any one of claims 1 to 6 is performed, or the device discovery method according to any one of claims 7 to 15 is performed, and the communication interface is configured to communicate with a module other than the communication apparatus.

20. A communication apparatus, wherein the communication apparatus comprises an interface circuit and a logic circuit, the interface circuit is configured to input and/or output information, and the logic circuit is configured to perform the device discovery method according to any one of claims 1 to 6, or perform the device discovery method according to any one of claims 7 to 15, to perform processing based on the information and/or generate the information.

21. A computer-readable storage medium, wherein the computer-readable storage medium stores computer instructions or a program; and when the computer instructions or the program is run on a computer, the device discovery method according to any one of claims 1 to 6 is performed, or the device discovery method according to any one of claims 7 to 15 is performed.

22. A computer program product, wherein the computer program product comprises computer instructions; and when some or all of the computer instructions are run on a computer, the device discovery method according to any one of claims 1 to 6 is performed, or the device discovery method according to any one of claims 7 to 15 is performed.
